# FASCICULE DE BREVET EUROPEEN

(11) **EP 2 332 831 B1**
(45) Date de publication et mention de la délivrance du brevet: **02.01.2013**
(21) Numéro de dépôt: 10014649.7
(22) Date de dépôt: 16.11.2010
(51) Int. Cl.: B64C 25/52

(54) **Béquille de protection d'un élément structural d'un aéronef, aéronef muni d'une telle béquille, et procédé anti-basculement mis en oeuvre par ladite béquille**
Hecksporn für ein Flugzeug, Flugzeug und Verfahren zum Verhindern des Kippens des Flugzeuges mittels des Hecksporns
Tail skid for an aircraft, aircraft and method to avoid the tipping of the aircraft by the use of said tail skid

(30) Priorité: 30.11.2009 FR 0905767
(43) Date de publication de la demande: 15.06.2011
(73) Titulaire: EUROCOPTER, 13725 Marignane Cédex (FR)
(72) Inventeur: Prud'homme-Lacroix, Pierre, 13127 Vitrolles (FR)
(74) Mandataire: GPI & Associés

(56) Documents cités:
- FR-A1- 2 554 210
- GB-A- 462 963
- US-A- 1 362 511
- US-A- 1 872 811
- US-A- 4 196 878

## Description

La présente invention concerne une béquille de protection d'un élément structural d'un aéronef contre un impact avec le sol, et un aéronef muni d'une telle béquille.

Plus précisément, l'invention a pour objet une béquille destinée à protéger la portion arrière d'un giravion, et notamment le rotor arrière anticouple d'un hélicoptère.

En effet, les règlements de certification d'un hélicoptère imposent que le rotor arrière anticouple soit protégé afin d'éviter un impact de ce rotor arrière avec le sol lorsque l'hélicoptère a une assiette à cabrer à proximité de ce sol.

Par exemple, lors d'un atterrissage en autorotation, le pilote cabre son hélicoptère à proximité du sol, cette procédure étant dénommée « flare » en langue anglaise par l'homme du métier. Par suite, le rotor arrière risque d'entrer en contact avec le sol ce qui pourrait induire une situation catastrophique.

Par ailleurs, lors d'un atterrissage à grande vitesse, le pilote cabre fortement l'hélicoptère pour le freiner.

Ainsi, les aéronefs, et notamment les hélicoptères, comprennent avantageusement une protection contre un impact avec le sol en cas de forte incidence à cabrer de l'aéronef.

Il est par exemple possible de disposer une roulette à l'arrière d'un aéronef. Eventuellement, conformément au document EP0781224, il est possible de coupler la roulette avec un ski.

Selon le document GB357476, on peut remplacer un train d'atterrissage à roues par des skis.

On connaît aussi un sabot écrasable et changeable agencé dans un élément structural. Par exemple, l'hélicoptère connu sous la marque Gazelle® de la demanderesse est pourvu d'un tel sabot à l'intérieur de la quille de son rotor arrière caréné, à savoir à l'intérieur de l'élément structural inférieur de ce rotor arrière caréné en regard du sol lorsque l'hélicoptère est posé.

Un tel sabot doit néanmoins être changé ou réparé après chaque contact endommageant avec le sol. Les réparations sont parfois réalisées par le propriétaire du giravion et de fait dans des conditions non optimales.

De manière alternative, d'autres aéronefs sont munis d'une béquille élastique munie d'au moins une lame de contact, une première extrémité de la béquille étant munie d'une partie cintrée.

Selon une réalisation, la deuxième extrémité de lame est fixée par deux moyens de fixation distincts à l'élément structural à protéger. Le document le plus pertinent FR 2554210 présente une béquille de ce type agencée sur la poutre de queue d'un hélicoptère.

La béquille se trouve alors de fait en porte-à-faux, ce qui explique que l'homme du métier emploie parfois le terme anglais « cantilever » pour la nommer.

Les béquilles s'avèrent difficiles à mettre au point. Ainsi, les béquilles doivent être suffisamment raides pour que le pilote ait conscience d'un contact entre la béquille et le sol tout en étant suffisamment souple pour absorber l'énergie résultant de ce contact sans générer des efforts trop importants dans la structure. Toutefois, elles sont couramment utilisées sur les aéronefs.

L'état de la technique comprend de plus les documents GB 462963 et US 4196878 notamment.

La présente invention a alors pour objet de proposer une béquille alternative permettant d'éviter un basculement de l'hélicoptère lors d'un atterrissage sur un sol mou.

Selon l'invention, une béquille de giravion comporte une lame de contact pourvue s'étendant d'une première extrémité de contact vers une deuxième extrémité, cette première extrémité étant munie d'une face supérieure apte à être en regard d'une structure du giravion et d'une face inférieure apte à être dirigée vers un sol lorsque la béquille est fixée à un giravion posé sur un sol, la face inférieure ayant une première surface. Cette béquille est notamment remarquable en ce qu'elle comporte un organe supplétif de contact apte à empêcher la face inférieure de pénétrer dans le sol et un moyen de fixation de l'organe supplétif à ladite première extrémité, l'organe supplétif ayant une face de fixation et une face de contact pourvue d'une deuxième surface supérieure à la première surface, le moyen de fixation accolant la face de fixation contre la face inférieure afin que cette face inférieure soit entièrement recouverte par l'organe supplétif.

Alors qu'il ne paraît pas y avoir un rapport direct entre la béquille et un basculement du giravion à l'atterrissage, la demanderesse constate que la béquille selon l'invention est apte à éviter certains basculements.

En effet, de manière ingénieuse la demanderesse a noté que la béquille peut être l'organe du giravion destiné à toucher en premier lieu le sol lors d'un atterrissage en conditions difficiles. Cet impact peut être dangereux sur un sol mou, dénommé parfois sol meuble ou encore sol souple par l'homme du métier.

II est à noter qu'un sol dur peut être représenté dans un modèle par éléments finis à l'aide d'éléments ayant une raideur infinie, alors qu'au contraire le sol mou est représenté par des éléments ayant une raideur qui n'est pas infinie.

Plus précisément, pour bien appréhender le problème, on peut définir la raideur d'un sol mou de manière non constante. Ainsi, la raideur du sol mou peut avoir une première valeur importante au moment du contact entre le train d'atterrissage et le sol, puis une deuxième valeur faible suite à ce contact, de l'ordre d'un centième de ladite première valeur par exemple.

Dès lors, lorsque le sol est mou, une béquille traditionnelle tend à s'enfoncer dans le sol. La béquille étant alors bloquée latéralement dans le sol dans lequel cette béquille est enfoncée, un ordre visant à modifier le pas cyclique latéral des pales du ou des rotors de sustentation tend à provoquer un renversement du giravion.

Cette situation est potentiellement dangereuse et peut se produire dans la mesure où plusieurs raisons motivent un tel ordre. Par exemple, deux raisons principales motivent cet ordre pour un giravion de type hélicoptère lié à un référentiel comportant un axe de roulis, un axe de tangage et un axe de lacet autour duquel axe de lacet est mis en rotation une voilure tournante, l'hélicoptère s'étendant longitudinalement de l'avant vers l'arrière selon la direction positive de l'axe de roulis.

Selon une première raison, l'hélicoptère présente généralement une assiette en roulis de l'ordre de quelques degrés lors de l'atterrissage. Par exemple, l'hélicoptère présente un angle de roulis de quelques degrés vers la droite, correspondant à une rotation de l'hélicoptère autour de l'axe de roulis dans le sens dextrorsum lorsque l'on regarde l'hélicoptère de l'arrière vers l'avant.

Il s'agit dans ces conditions de poser au sol par exemple un premier patin du train d'atterrissage de l'hélicoptère puis après le second patin de ce train d'atterrissage pour assurer un contact progressif avec le sol sans rebond

Au moment du contact avec le sol, un pilote déplace alors légèrement sa commande de pas cyclique latéralement pour retrouver une assiette en roulis neutre.

Selon une deuxième raison, lorsque la béquille est le premier organe de l'hélicoptère impactant le sol, l'impact de la béquille avec le sol provoquant une accélération angulaire négative autour de l'axe de tangage de l'hélicoptère et donc une mise en rotation négative de l'hélicoptère autour de l'axe de tangage tendant à rapprocher l'avant de l'hélicoptère du sol.

Comme la voilure tournante effectue une rotation autour de l'axe de lacet, un effet gyroscopique génère une inclinaison de l'hélicoptère par rapport à l'axe de roulis. Autrement dit, l'effet gyroscopique, d'aspect paradoxal provoque sous l'effet d'un moment selon l'axe de tangage une rotation de la voilure tournante et donc de l'hélicoptère autour de l'axe de roulis. Donc, si la voilure tournante tourne dans le sens dextrorsum vue de dessus, l'hélicoptère tend à tourner autour de l'axe de roulis dans le sens dextrorsum vue de l'arrière vers l'avant.

Cette deuxième raison, bien que très secondaire par rapport à la première, accroît l'action résultante par rapport à celle relative à la première raison.

Le pilote a donc deux raisons principales d'actionner la commande de pas cyclique pour modifier le pas cyclique latéral des pales de la voilure tournante. Une béquille classique pouvant être immobilisée latéralement, l'hélicoptère risque éventuellement de se coucher sur le côté gauche.

Cependant, la face de contact de l'organe supplétif a une deuxième surface supérieure à la première surface de la lame de contact. Par rapport à une béquille traditionnelle, l'organe supplétif représente une surface additionnelle visant finalement à optimiser la surface de contact de la béquille avec le sol.

L'organe supplétif empêche en effet l'enfoncement de la béquille dans le sol. Dès lors, la béquille n'est pas bloquée dans ce sol et ne risque pas d'être à l'origine d'un basculement de l'aéronef. Ainsi, la béquille comporte un moyen anti-basculement, ce moyen anti-basculement comportant un organe supplétif fixé sous la première extrémité de la lame de contact, par un moyen de fixation de type colliers, vis ou autres.

En effet, en représentant un moyen anti-enfoncement de la béquille, l'organe supplétif est donc finalement un moyen anti-basculement du giravion.

Pour dimensionner l'organe supplétif, on détermine quelle partie de la béquille s'enfonce dans un sol mou, cette partie étant finalement la première extrémité à laquelle on fixe ledit organe supplétif apte à fournir une deuxième surface évitant un enfoncement. A l'aide de ces informations, on peut donc réaliser l'invention.

Dès lors, la lame de contact s'étendant longitudinalement sur une première longueur développée, la première extrémité couvre une deuxième longueur développée comprise entre 10% et 90% de ladite première longueur développée en fonction du type de giravion. On note que l'on obtient la longueur développée en aplatissant la lame de contact. Ainsi si la lame de contact comporte une portion plane et une portion cintrée, on déplie la lame de contact pour mesurer les différentes longueurs. Autrement dit, la première longueur développée est la longueur de la lame de contact mesurée avec un instrument de mesure appliqué tangentiellement à cette lame de contact.

La béquille peut de plus posséder une ou plusieurs des caractéristiques qui suivent.

Par exemple, l'organe supplétif est éventuellement conformé à la forme de la première extrémité de contact.

Cette première extrémité de la lame de contact ayant une zone longiligne puis une zone cintrée, l'organe supplétif comporte alors une portion plane en vis-à-vis de la zone longiligne suivie d'une portion cintrée en vis-à-vis de la zone cintrée.

De plus, l'organe supplétif peut comporter deux rebords latéraux saillant de la face de fixation, chaque section transversale de l'organe supplétif présentant un socle reliant deux branches latérales représentant lesdits rebords. Les rebords latéraux sont donc des bords latéraux relevés et favorisent le glissement latéral de l'organe supplétif pour éviter un blocage de la béquille dans un sol mou.

Une première épaisseur de la lame de contact reliant la face inférieure à la face supérieure, les rebords latéraux ont une deuxième épaisseur saillant de la face de fixation qui est supérieure à la première épaisseur.

Par ailleurs, l'organe supplétif comporte éventuellement une plaque triangulaire. Ainsi, selon une variante, l'organe supplétif comporte une plaque triangulaire favorablement conformée à la forme de la lame en ayant été cintrée dans une zone distale.

D'autres formes sont envisageables, à savoir non exclusivement une plaque ovale, circulaire ou encore rectangulaire par exemple.

En outre, la béquille comporte une pluralité de raidisseurs agencés sur la faxe de fixation de part et d'autre de la première extrémité de la lame de contact, des boudins de raidissement par exemple

Enfin, la lame de contact ayant une première extrémité suivie d'une deuxième extrémité, la première extrémité est apte à être plus proche du sol que la deuxième extrémité lorsque la béquille est fixée à un giravion posé sur ce sol.

Outre, une béquille, l'invention vise également un giravion équipé de la béquille décrite précédemment.

Selon l'invention, un giravion est donc muni d'une voilure tournante et d'une cellule s'étendant longitudinalement d'une portion arrière vers une portion avant. La portion arrière comporte une béquille munie d'au moins une lame de contact, la lame de contact s'étendant d'une première extrémité de contact vers une deuxième extrémité, cette première extrémité de contact étant munie d'une face supérieure en regard de la cellule et d'une face inférieure apte à être dirigée vers un sol lorsque le giravion est posé sur ce sol, la face inférieure ayant une première surface,

Par exemple, la portion arrière correspond à la poutre de queue portant le rotor anticouple d'un hélicoptère, une deuxième extrémité de la béquille étant fixée directement ou indirectement à un carénage de cette portion arrière.

La béquille possède alors avantageusement un moyen anti-basculement du giravion, ledit moyen anti-basculement comportant un organe supplétif de contact de la béquille apte à empêcher la face inférieure de pénétrer dans le sol et un moyen de fixation de l'organe supplétif à la première extrémité, l'organe supplétif ayant une face de fixation et une face de contact pourvue d'une deuxième surface supérieure à la première surface, le moyen de fixation accolant la face de fixation contre la face inférieure afin que cette face inférieure soit entièrement recouverte par l'organe supplétif.

Par ailleurs, l'invention vise un procédé pour empêcher le basculement vers l'avant ou sur le côté d'un giravion lors d'un atterrissage, le giravion ayant une cellule s'étendant longitudinalement d'une portion arrière vers une portion avant, la portion arrière comportant une béquille munie d'au moins une lame de contact s'étendant d'une première extrémité de contact vers une deuxième extrémité, cette première extrémité de contact étant munie d'une face supérieure en regard de la cellule et d'une face inférieure apte à être dirigée vers un sol lorsque le giravion est posé sur ce sol, la face inférieure ayant une première surface.

Au cours de ce procédé on dispose un moyen anti-basculement sur ladite première extrémité, ledit moyen anti-basculement comportant un organe supplétif de contact de la béquille apte à empêcher la face inférieure de pénétrer dans le sol et un moyen de fixation de l'organe supplétif à la première extrémité, l'organe supplétif ayant une face de fixation et une face de contact pourvue d'une deuxième surface supérieure à la première surface, le moyen de fixation accolant la face de fixation contre la face inférieure afin que cette face inférieure soit entièrement recouverte par l'organe supplétif

L'invention et ses avantages apparaîtront avec plus de détails dans le cadre de la description qui suit avec des exemples de réalisation donnés à titre illustratif en référence aux figures annexées qui représentent :
- la figure 1, une vue de côté d'un giravion selon l'invention,
- la figure 2, une vue d'une béquille selon un premier mode de réalisation, et
- la figure 3, une vue d'une béquille selon un deuxième mode de réalisation.

Les éléments présents dans plusieurs figures distinctes sont affectés d'une seule et même référence.

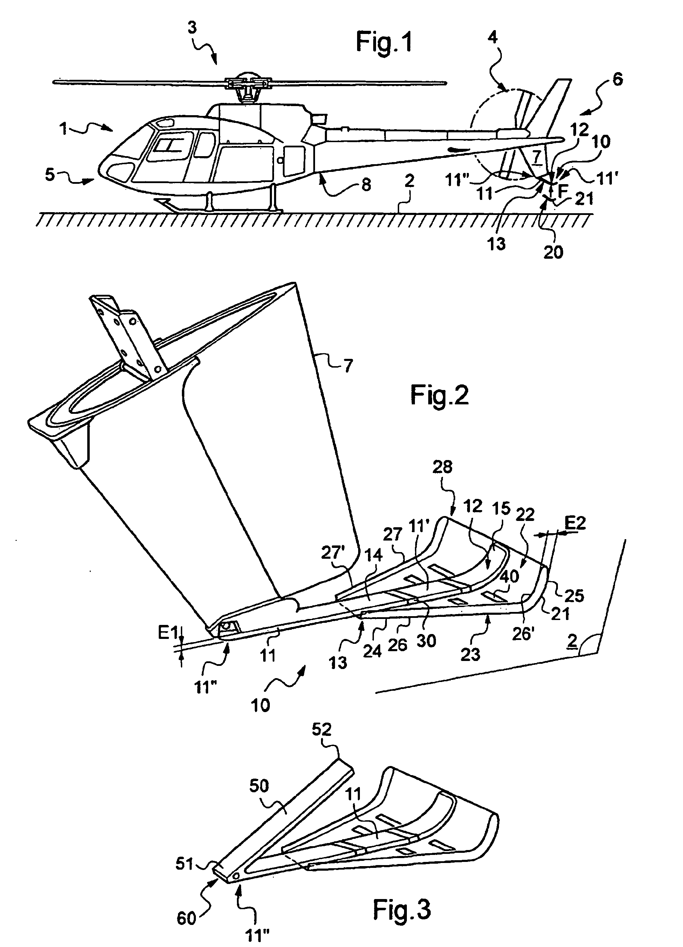

La figure 1 présente un giravion 1 muni d'une cellule 8 s'étendant longitudinalement le long de son axe de roulis d'une portion arrière 6 à une portion avant 5, la portion arrière 6 comportant une poutre de queue soutenant une dérive.

Ce giravion étant un hélicoptère, il comporte de plus une voilure tournante 3 ainsi qu'un rotor anticouple 4, ce rotor anticouple 4 étant agencé sur la portion arrière 6. Plus précisément, le rotor anticouple 4 est disposé au niveau de la dérive de la portion arrière 6.

Par ailleurs, cette dérive comporte classiquement un carénage inférieur 7, en regard du sol 2 sur lequel est posé le giravion 1.

Dès lors, le giravion 1 comporte une béquille 10 comportant une lame de contact 11 s'étendant d'une première extrémité 11' vers une deuxième extrémité 11". La deuxième extrémité 11" est alors fixée au carénage 7. Ainsi, la première extrémité 11' est plus proche du sol 2 que la deuxième extrémité 11" lorsque la béquille 10 est fixée à un giravion 1 posé sur ce sol 2.

Par conséquent, la première extrémité 11' de la lame de contact 11 possède une face supérieure 12 en regard de la cellule 8 du giravion 1, et notamment du carénage 7.

De plus, cette première extrémité 11' comporte une face inférieure 13 en regard du sol 2. La face inférieure 13 est opposée à la face supérieure 12 et couvre une première surface S1.

La demanderesse a identifié un risque d'enfoncement de la première extrémité 11' dans un sol mou, cet enfoncement pouvant dans des conditions extrêmes conduire à un accident.

Pour éliminer ce risque, le giravion 1 possède un moyen anti-basculement 20. Ce moyen anti-basculement 20 comprend un organe supplétif 21 de contact de la béquille 10, cet organe supplétif 21 étant accolé à la face inférieure 13 conformément à la flèche F. Pour maintenir en position l'organe supplétif 21 contre la face inférieure 13, la béquille 10 comporte un moyen de fixation non représenté sur la figure 1. Ce moyen de fixation peut être du type collier, du type moyen de vissage, du type fixation par un moyen de collage, du type cordon de soudure ou tout autre type de fixation connu permettant d'assurer la liaison.

La figure 2 présente une béquille selon un premier mode de réalisation de l'invention.

Indépendamment du mode de réalisation, l'organe supplétif 21 comporte une face de fixation 22 et une face de contact 23, la face de contact 23 couvrant une deuxième surface S2 supérieure à la première surface S1 de la première extrémité 11'.

L'organe supplétif 21 est alors fixé à la première extrémité 11' par le moyen de fixation 40, des colliers sur l'exemple représenté. Il en résulte que la face de fixation 22 est accolée contre la face inférieure 13, la face inférieure 13 étant totalement recouverte par la face de fixation 22 de l'organe supplétif 21.

Ainsi, sur un giravion classique, lors d'un atterrissage la face inférieure 13 de la lame de contact 11 entre en contact avec le sol, voire pénètre dans le sol. A l'inverse, selon l'invention l'organe supplétif empêche la face inférieure d'entrer en contact avec le sol puis d'y pénétrer, le contact ayant finalement lieu entre la face de contact 23 de l'organe supplétif 21 et le sol 2.

La deuxième surface S2 étant supérieure à la première surface S1. l'organe supplétif 21 devient un moyen anti-enfoncement de la béquille dans un sol mou, et par suite de manière surprenante un moyen anti-basculement du giravion 1.

Ainsi, selon l'invention, pour éviter un basculement du giravion lors d'un atterrissage, on dispose sous la première extrémité un organe supplétif 21 ayant une face de contact 23 couvrant une deuxième surface plus importante par rapport à la face inférieure 13 d'une béquille traditionnelle.

Par ailleurs, l'organe supplétif 21 est par exemple une tôle emboutie, mais peut comporter de manière alternative un élastomère, un matériau composite, un panneau sandwich ou encore un métal déployé.

L'organe supplétif 21 présenté sur les figures 2 et 3 est de plus conformé à la forme de la première extrémité 11' qu'il recouvre.

Plus précisément, la première extrémité 11' de la lame de contact 11 ayant une zone longiligne 14 puis une zone cintrée 15, ledit organe supplétif 21 comporte une portion plane 24 en vis-à-vis de ladite zone longiligne 14 suivie d'une portion cintrée 25 en vis-à-vis de ladite zone cintrée 15.

Des lors, l'organe supplétif 21 comporte une plaque triangulaire cintrée pour être conformé à la forme de la première extrémité 11'. D'autres formes, ovale, circulaire ou encore rectangulaire par exemple, sont envisageables.

En outre, l'organe supplétif représenté est muni d'un premier rebord latéral 26 et d'un deuxième rebord latéral 27 s'élevant à partir de la face de fixation 22 vers leur extrémité distale 26', 27' en direction du carénage 7 de la cellule 8, et par suite selon une direction opposée à la face de contact 23 afin d'éloigner les rebords latéraux de cette face de contact 23. Ces rebords latéraux 26, 27 sont donc relevés pour être en saillie par rapport à la face de fixation 22.

La lame de contact 11 ayant une première épaisseur E1 entre sa face inférieure 13 et sa face supérieure 12, ces rebords latéraux ont une deuxième épaisseur E2 entre la face de fixation 22 et leur extrémité distale 26', 27'. La deuxième épaisseur E2 est éventuellement supérieure à la première épaisseur E1.

Par ailleurs, dans le cadre d'un organe supplétif muni d'une tôle mince, il est intéressant de munir l'organe supplétif 21 d'une pluralité de raidisseurs 40, plus particulièrement des boudins de raidissement agencés sur la face de fixation 22 de part et d'autre de la lame de contact 11.

En référence à la figure 2, selon un premier mode de réalisation, la béquille comporte une seule lame, à savoir la lame de contact 11. La deuxième extrémité 11" de la lame de contact 11 est alors fixée à la cellule 8, au carénage 7 par exemple.

A l'inverse, en référence à la figure 3, selon un deuxième mode de réalisation, la béquille comporte une lame de contact 11 et une lame de fixation 50 s'étendant d'une première zone extrémale 51 vers une deuxième zone extrémale 52.

La deuxième extrémité 11" de la lame de contact est alors solidarisée à la première zone extrémale 51 dans une zone de jonction 60, cette zone de jonction 60 étant alors fixée à la cellule 8.

Naturellement, la présente invention est sujette à de nombreuses variations quant à sa mise en oeuvre. Bien que plusieurs modes de réalisation aient été décrits, on comprend bien qu'il n'est pas concevable d'identifier de manière exhaustive tous les modes possibles. Il est bien sûr envisageable de remplacer un moyen décrit par un moyen équivalent sans sortir du cadre de la présente invention, comme défini par les revendications.

## Revendications

1. Béquille (10) de giravion (1) comportant une lame de contact (11) s'étendant d'une première extrémité (11') de contact vers une deuxième extrémité (11"), ladite première extrémité (11') de contact étant munie d'une face supérieure (12) apte à être en regard d'une structure (7) du giravion (1) et d'une face inférieure (13) apte à être dirigée vers un sol (2) lorsque ladite béquille (10) est fixée à un giravion (1) posé sur un sol (2), ladite face inférieure (13) ayant une première surface,
**caractérisé en ce qu'**elle comporte un organe supplétif (21) de contact apte à empêcher ladite face inférieure (13) d'entrer en contact avec le sol (2) et un moyen de fixation (30) dudit organe supplétif (21) à ladite première extrémité (11'), ledit organe supplétif (21) ayant une face de fixation (22) et une face de contact (23) pourvue d'une deuxième surface supérieure à ladite première surface, le moyen de fixation (30) accolant ladite face de fixation (22) contre ladite face inférieure (13) afin que cette face inférieure (13) soit entièrement recouverte par ledit organe supplétif (21).

2. Béquille selon la revendication 1,
**caractérisé en ce que** ledit organe supplétif (21) est conformé à la forme de ladite première extrémité (11').

3. Béquille selon l'une quelconque des revendications précédentes,
**caractérisé en ce que** ladite première extrémité (11') de la lame de contact (11) ayant une zone longiligne (14) puis une zone cintrée (15), ledit organe supplétif (21) comporte une portion plane (24) en vis-à-vis de ladite zone longiligne (14) suivie d'une portion cintrée (25) en vis-à-vis de ladite zone cintrée (15).

4. Béquille selon l'une quelconque des revendications précédentes,
**caractérisé en ce que** ledit organe supplétif (21) comporte deux rebords (26, 27) latéraux saillant de ladite face de fixation (22).

5. Béquille selon la revendication 4,
**caractérisé en ce que**, une première épaisseur (E1) reliant ladite face inférieure (13) de ladite face supérieure (12) lesdits rebords latéraux (26, 27) ont une deuxième épaisseur (E2) saillant de ladite face de fixation (22) supérieure à ladite première épaisseur (E1).

6. Béquille selon l'une quelconque des revendications 1 à 4,
**caractérisé en ce que** ledit organe supplétif (21) comporte une plaque triangulaire (28).

7. Béquille selon l'une quelconque des revendications précédentes,
**caractérisé en ce que** ladite béquille (10) comporte une pluralité de raidisseurs (40) agencés sur ladite face de fixation (22) de part et d'autre de ladite première extrémité (11') de la lame de contact (11).

8. Béquille selon l'une quelconque des revendications précédentes,
**caractérisé en ce que**, ladite lame de contact (11) ayant une première extrémité (11') suivie d'une deuxième extrémité (11"), ladite première extrémité (11') est apte à être plus proche du sol (2) que ladite deuxième extrémité (11") lorsque ladite béquille (10) est fixée à un giravion (1) posé sur ledit sol.

9. Giravion (1) muni d'une voilure tournante (3) et d'une cellule (8) s'étendant longitudinalement d'une portion arrière (6) vers une portion avant (5), ladite portion arrière (6) comportant une béquille (10) munie d'au moins une lame de contact (11), ladite lame de contact (11) s'étendant d'une première extrémité (11') de contact vers une deuxième extrémité (11"), ladite première extrémité (11') de contact étant munie d'une face supérieure (12) en regard de ladite cellule (8) et d'une face inférieure (13) apte à être dirigée vers un sol (2) lorsque ledit giravion (1) est posé sur un sol (2), ladite face inférieure (13) ayant une première surface,
**caractérisé en ce que** ladite béquille (10) possède un moyen anti-basculement (20) dudit giravion (1), ledit moyen anti-basculement (20) comportant un organe supplétif (21) de contact de ladite béquille (10) apte à empêcher ladite face inférieure (13) de pénétrer dans le sol (2) et un moyen de fixation (30) dudit organe supplétif (21) à ladite première extrémité (11'), ledit organe supplétif (21) ayant une face de fixation (22) et une face de contact (23) pourvue d'une deuxième surface supérieure à ladite première surface, le moyen de fixation (30) accolant ladite face de fixation (22) contre ladite face inférieure (13) afin que cette face inférieure (13) soit entièrement recouverte par ledit organe supplétif (21).

10. Procédé pour empêcher le basculement vers l'avant ou sur le côté d'un giravion (1) lors d'un atterrissage, ledit giravion (1) ayant une cellule (8) s'étendant longitudinalement d'une portion arrière (6) vers une portion avant (5), ladite portion arrière (6) comportant une béquille (10) munie d'au moins une lame de contact (11), ladite lame de contact (11) s'étendant d'une première extrémité (11') de contact vers une deuxième extrémité (11"), ladite première extrémité (11') de contact étant munie d'une face supérieure (12) en regard de ladite cellule (8) et d'une face inférieure (13) apte à être dirigée vers un sol (2) lorsque ledit giravion (1) est posé sur un sol (2), ladite face inférieure (13) ayant une première surface,
au cours duquel l'on dispose un moyen anti-basculement (20) sur ladite première extrémité (11'), ledit moyen anti-basculement (20) comportant un organe supplétif (21) de contact de ladite béquille (10) apte à empêcher ladite face inférieure (13) de pénétrer dans le sol (2) et un moyen de fixation (30) dudit organe supplétif (21) à ladite première extrémité (11'), ledit organe supplétif (21) ayant une face de fixation (22) et une face de contact (23) pourvue d'une deuxième surface supérieure à ladite première surface, le moyen de fixation (30) accolant ladite face de fixation (22) contre ladite face inférieure (13) afin que cette face inférieure (13) soit entièrement recouverte par ledit organe supplétif (21).

## Claims

1. Tail skid (10) for a rotorcraft (1) comprising a contact blade (11) extending from a contact first end (11') towards a second end (11"), said contact first end (11') being provided with a top face (12) suitable for facing a structure (7) of the rotorcraft (1) and a bottom face (13) suitable for facing towards a ground (2) when said tail skid (10) is fastened to a rotorcraft (1) standing on a ground (2), said bottom face (13) having a first area,
**characterised in that** the tail skid comprises an additional contact member (21) suitable for preventing said bottom face (13) from coming into contact with the ground (2), and fastener means (30) for fastening said additional member (21) to said first end (11'), said additional member (21) having a fastener face (22) and a contact face (23) provided with a second area that is greater than said first area, the fastener means (30) holding said fastener face (22) against said bottom face (13) so that said bottom face (13) is completely covered by said additional member (21).

2. Tail skid according to Claim 1,
**characterised in that** said additional member (21) is shaped to match the shape of said first end (11').

3. Tail skid according to any one of the preceding claims,
**characterised in that** said first end (11') of the contact blade (11) has a longilinear zone (14) followed by a curved zone (15), and said additional member (21) comprises a plane portion (24) facing said longilinear zone (14) followed by a curved portion (25) facing said curved portion (15).

4. Tail skid according to any one of the preceding claims,
**characterised in that** said additional member (21) comprises two side rims (26, 27) projecting from said fastener face (22).

5. Tail skid according to Claim 4,
**characterised in that** said bottom face (13) and said top face (12) are spaced apart by a first thickness (E1) and said side rims (26, 27) projecting from said fastener face (22) have a second thickness (E2), said second thickness (E2) being greater than said first thickness (E1) .

6. Tail skid according to any one of Claims 1 to 4,
**characterised in that** said additional member (21) comprises a triangular plate (28).

7. Tail skid according to any one of the preceding claims,
**characterised in that** said tail skid (10) comprises a plurality of stiffeners (40) arranged on said fastener face (22) on either side of said first end (11') of the contact blade (11).

8. Tail skid according to any one of the preceding claims,
**characterised in that** said contact blade (11) has a first end (11') followed by a second end (11"), and said first end (11') is suitable for being closer to the ground than said second end (11") when said tail skid (10) is fastened to a rotorcraft (1) standing on said ground.

9. Rotorcraft (1) provided with a rotary wing (3) and an airframe (8) extending longitudinally from a rear portion (6) towards a front portion (5), said rear portion (6) comprising a tail skid (10) provided with at least one contact blade (11), said contact blade (11) extending from a contact first end (11') towards a second end (11"), said contact first end (11') being provided with a top face (12) facing said airframe (8) and a bottom face (13) suitable for facing towards a ground (2) when said rotorcraft (1) is standing on a ground (2), said bottom face (13) having a first area,
**characterised in that** said tail skid (10) possesses anti-overturning means (20) for said rotorcraft (1), said anti-overturning means (20) comprising an additional contact member (21) of said tail skid (10) suitable for preventing said bottom face (13) from penetrating into the ground (2), and fastener means (30) for fastening said additional member (21) to said first end (11'), said additional member (21) having a fastener face (22) and a contact face (23) provided with a second area that is greater than said first area, the fastener means (30) holding said fastener face (22) against said bottom face (13) so that said bottom face (13) is completely covered by said additional member (21).

10. Method of preventing a rotorcraft (1) from overturning forwards or sideways during a landing, said rotorcraft (1) having an airframe (8) extending longitudinally from a rear portion (6) towards a front portion (5), said rear portion (6) comprising a tail skid (10) provided with at least one contact blade (11), said contact blade (11) extending from a contact first end (11') towards a second end (11"), said contact first end (11') being provided with a top face (12) facing said airframe (8) and a bottom face (13) suitable for facing towards a ground (2) when said rotorcraft (1) is standing on a ground (2), said bottom face (13) having a first area,
in which method, anti-overturning means (20) are placed on said first end (11'), said anti-overturning means (20) comprising an additional contact member (21) of said tail skid (10) suitable for preventing said bottom face (13) from penetrating into the ground (2), and fastener means (30) for fastening said additional member (21) to said first end (11'), said additional member (21) having a fastener face (22) and a contact face (23) provided with a second area that is greater than said first area, the fastener means (30) holding said fastener face (22) against said bottom face (13) so that said bottom face (13) is completely covered by said additional member (21).

## Patentansprüche

1. Hecksporn (10) eines Drehflügelflugzeugs (1) mit einer Kontaktkufe (11), die sich von einem ersten Kontaktende (11') bis zu einem zweiten Ende (11") erstreckt, wobei das erste Kontaktende (11') eine Oberseite (12) aufweist, die gegenüber einem Bauteil (7) des Drehflügelflugzeugs (1) liegen kann, und eine Unterseite (13), die in Richtung auf den Boden (2) gerichtet werden kann, wenn der Hecksporn (10) an einem Drehflügelflugzeug (1) befestigt ist, welches sich am Boden (2) befindet, wobei die Unterseite (13) eine erste Fläche aufweist,
**gekennzeichnet durch** ein Zusatzkontaktelement (21), das verhindern kann, dass die Unterseite (13) in Kontakt mit dem Boden (2) tritt, und ein Mittel (30) zur Befestigung des Zusatzelements (21) an dem ersten Ende (11'), wobei das Zusatzelement (21) eine Befestigungsfläche (22) und eine Kontaktfläche (23) aufweist, die mit einer zweiten Fläche versehen ist, die höher liegt als die erste Fläche, wobei das Befestigungsmittel (30) die Befestigungsfläche (22) gegen die untere Fläche (13) anlegt, damit diese untere Fläche (13) vollständig von dem Zusatzelement (21) bedeckt ist.

2. Hecksporn nach Anspruch 1,
**dadurch gekennzeichnet, dass** das Zusatzelement (21) die gleiche Form hat wie das erste Ende (11').

3. Hecksporn nach einem der vorstehenden Ansprüche,
**dadurch gekennzeichnet, dass** das erste Ende (11') der Kontaktkufe (11) einen geradlinigen Bereich (14) und einen gebogenen Bereich (15) aufweist, wobei das Zusatzelement (21) einen ebenen Bereich (24) gegenüber dem geradlinigen Bereich (14) aufweist, gefolgt von einem gebogenen Teilstück gegenüber dem gebogenen Bereich (15).

4. Hecksporn nach einem der vorstehenden Ansprüche,
**dadurch gekennzeichnet, dass** das Zusatzelement (21) zwei seitliche Ränder (26, 27) aufweist, die gegenüber der Befestigungsfläche (22) überstehen.

5. Hecksporn nach Anspruch 4,
**dadurch gekennzeichnet, dass** eine erste Dicke (E1) die Unterseite (13) mit der Oberseite (12) verbindet, und die Seitenränder (26, 27) eine zweite über die oberen Befestigungsfläche (22) überstehende Dicke (E2) aufweisen, die größer als die erste Dicke (E1) ist.

6. Hecksporn nach einem der Ansprüche 1 bis 4,
**dadurch gekennzeichnet, dass** das Zusatzelement (21) eine dreieckige Platte (28) aufweist.

7. Hecksporn nach einem der vorstehenden Ansprüche,
**dadurch gekennzeichnet, dass** der Hecksporn (10) eine Mehrzahl von Versteifungsrippen (40) aufweist, die auf der Befestigungsfläche (22) zu beiden Seiten des ersten Endes (11') der Kontaktkufe (11) angeordnet sind.

8. Hecksporn nach einem der vorstehenden Ansprüche,
**dadurch gekennzeichnet, dass** die Kontaktkufe (11) ein erstes Ende (11') aufweist, gefolgt von einem zweiten Ende (11"), wobei das erste Ende (11') näher am Boden (2) sein kann als das zweite Ende (11"), wenn der Hecksporn (10) an einem Drehflügelflugzeug (1) befestigt ist, welches sich am Boden befindet.

9. Drehflügelflugzeug (1) mit Drehflügeln (3) und einem Rumpf (8), der sich in Längsrichtung von einem hinteren Bereich (6) bis zu einem vorderen Bereich (5) erstreckt, wobei der hintere Bereich (6) einen Hecksporn (10) aufweist versehen mit mindestens einer Kontaktkufe (11), wobei die Kontaktkufe (11) sich von einem ersten Kontaktende (11') bis zu einem zweiten Ende (11") erstreckt, wobei das erste Kontaktende (11') eine Oberseite (12) gegenüber dem Rumpf (8) und eine Unterseite (13) aufweist, die in Richtung auf den Boden (2) gerichtet sein kann, wenn das Drehflügelflugzeug (1) sich am Boden (2) befindet, wobei die Unterseite (13) eine erste Oberfläche aufweist,
**dadurch gekennzeichnet, dass** der Hecksporn (10) ein Mittel (20) zur Verhinderung des Kippens des Drehflügelflugzeugs (1) aufweist, wobei das Mittel (20) zur Verhinderung des Kippens ein Zusatzkontaktelement (21) des Hecksporns (10) aufweist, welches verhindern kann, dass die Unterseite (13) in den Boden (2) eindringen kann, und ein Befestigungsmittel (30) des Zusatzelements (21) an dem ersten Ende (11'), wobei das Zusatzelement (21) eine Befestigungsseite (22) und eine Kontaktseite (23) aufweist mit einer zweiten Oberfläche, die höher liegt als die erste Oberfläche, wobei das Befestigungsmittel (30) die Befestigungsseite (22) gegen die untere Seite (13) anlegt, damit diese untere Seite (13) vollständig durch das Zusatzelement (21) bedeckt ist.

10. Verfahren zum Verhindern des Kippens nach vorne oder zur Seite eines Drehflügelflugzeugs (1) während einer Landung, wobei das Drehflügelflugzeug (1) einen Rumpf (8) aufweist, der sich in Längsrichtung von einem hinteren Bereich (6) bis zu einem vorderen Bereich (5) erstreckt, wobei der hintere Bereich (6) einen Hecksporn (10) aufweist mit mindestens einer Kontaktkufe (11), wobei die Kontaktkufe (11) sich von einem ersten Kontaktende (11') bis zu einem zweiten Ende (11") erstreckt, wobei das erste Kontaktende (11') eine Oberseite (12) gegenüber dem Rumpf (8) und eine Unterseite (13) aufweist, die in Richtung auf den Boden (2) gerichtet werden kann, wenn das Drehflügelflugzeug (1) sich am Boden (2) befindet, wobei die Unterseite (13) eine erste Oberfläche aufweist,
wobei man bei dem Verfahren ein Mittel (20) zur Verhinderung des Kippens an dem ersten Ende (11') anbringt, wobei das Mittel (20) zur Verhinderung des Kippens ein Zusatzkontaktelement (21) des Hecksporns (10) aufweist, welches verhindern kann, dass die untere Seite (13) in den Boden (2) eindringt, und ein Befestigungsmittel (30) des Zusatzelements (21) an dem ersten Ende (11'), wobei das Zusatzelement (21) eine Befestigungsseite (22) und eine Kontaktseite (23) aufweist, wobei letztere eine zweite Oberfläche hat, die höher liegt als die erste Oberfläche, wobei das Befestigungsmittel (30) die Befestigungsseite (22) gegen die Unterseite (13) anlegt, damit diese Unterseite (13) vollständig von dem Zusatzelement (21) bedeckt ist.
